# EUROPÄISCHE PATENTSCHRIFT

(11) **EP 1 828 615 B1**
(45) Veröffentlichungstag und Bekanntmachung des Hinweises auf die Patenterteilung: **21.05.2008**
(21) Anmeldenummer: 05814583.0
(22) Anmeldetag: 01.12.2005
(51) Int. Cl.: F04D 29/12, F16J 15/34

(54) **ANORDNUNG AUS EINER WELLE MIT DARAUF MONTIERTER GLEITRINGDICHTUNG**
ARRANGEMENT OF A SHAFT WITH A SLIP-RING SEAL MOUNTED THEREON
ENSEMBLE CONSTITUE D'UN ARBRE SUR LEQUEL UN JOINT A ANNEAUX GLISSANTS EST MONTE

(30) Priorität: 21.12.2004 DE 202004019718 U
(43) Veröffentlichungstag der Anmeldung: 05.09.2007
(73) Patentinhaber: Burgmann Industries GmbH & Co. KG, 82515 Wolfratshausen (DE)
(72) Erfinder: FEIGL, Peter, 82515 Höhenrain (DE); LEDERER, Andreas, 80992 München (DE); SIMON, Clemens, 82319 Starnberg (DE)
(74) Vertreter: Schmidt, Horst
(86) Internationale Anmeldenummer: PCT/EP2005/012794
(87) Internationale Veröffentlichungsnummer: WO 2006/066692

(56) Entgegenhaltungen:
- EP-A- 1 113 176
- DE-C1- 3 146 844
- GB-A- 1 340 341
- US-A- 3 560 004
- US-A- 4 294 454
- US-A- 4 558 870
- US-A- 4 634 134

## Beschreibung

Die Erfindung betrifft eine Anordnung aus einer Welle mit darauf montierter Gleitringdichtung. Sie betrifft insbesondere eine Anordnung der gattungsgemässen Art mit besonderer Eignung zur Abdichtung von Kältemittelkompressoren für Kraftfahrzeug-Klimaanlagen.

Eine derartige Anordnung is bereits aus dem Druckschrift US 3560004 bekannt.

Bekannt sind Gleitringdichtungen (Burgmann, ABC der Gleitringdichtung, Selbstverlag 1988, Seite 156), bei denen eine Drehkraft auf den rotierenden Gleitring über eine Mitnehmereinrichtung übertragen wird, die an der Welle zur gemeinsamen Drehung mit dieser montiert ist. Bekannt ist es ferner (Burgmann a.a.O., Seite 236), durch einen gegenüber der Aussenumgebung abgetrennten, den Dichtspalt einer Gleitringdichtung einschliessenden Raum eine Sperrflüssigkeit von einer externen Quelle zirkulieren zu lassen.

Der Erfindung liegt die Aufgabe zugrunde, eine gattungsgemässe Anordnung zu schaffen, die bei einem unkomplizierten robusten Aufbau, der sich für eine Grossserienfertigung eignen soll, einen Trockenlauf der Gleitringdichtung in Gegenwart gelöste Gase enthaltender abzudichtender Flüssigkeiten, wie Kompressorenöl verhindern kann. Die Anordnung soll insbesondere zum Einsatz bei Kältemittelkompressoren geeignet sein.

Diese Aufgabe wird erfindungsgemäss durch eine Anordnung aus einer Welle mit darauf montierter Gleitringdichtung gelöst, welche Gleitringdichtung ein Paar zusammenwirkende Gleitringe umfasst, deren Dichtflächen zwischen sich einen Dichtspalt begrenzen, wobei einer der Gleitringe auf der Welle in Drehkraft übertragender Beziehung zu einem an der Welle montierten Mitnehmerelement angeordnet ist, während der andere Gleitring zur drehfesten Montage an einem stationären Bauteil vorgesehen ist. Dabei zeichnet sich die Anordnung dadurch aus, dass das Mitnehmerelement ein den äusseren Umfang des Gleitringes mit einem radialen Spalt übergreifendes rohrförmiges Mitnehmergehäuse aufweist, und dass in der Welle wenigstens eine einerends in einen vom Mitnehmergehäuse umgrenzten Raum ausmündende Passage zur Zuführung eines Strömungsmediums vorgesehen ist, das über den radialen Spalt nach aussen abführbar ist, wobei der radiale Spalt einen Strömungsweg für das Strömungsmedium schafft, der an oder nahe bei dem Dichtspalt (6) endet.

Mit den erfindungsgemässen Massnahmen wird bewirkt, dass beim Betrieb der Gleitringdichtung eine ausreichend starke Strömung eines flüssigen Mediums, bei dem es sich um das abzudichtende Medium (z.B. Kompressorenöl) handeln kann, längs des Dichtspaltes vorbeigeführt wird, der zwischen den Dichtflächen der zusammenwirkenden Gleitringe definiert ist, um an dieser Stelle ggf. aus dem abzudichtenden Medium abgeschiedene Gasblasen wegzubefördern, so dass gewährleistet ist, dass am Dichtspalt stets flüssiges Medium ansteht. In den Dichtspalt gelangte Gasblasen können einen Tockenlauf der Gleitringdichtung und damit einen übermässigen Verschleiss wegen unzureichender Schmierung der Dichtflächen bewirken. Gleichzeitig kann das Strömungsmedium den rotierenden Gleitring wirksam kühlen und dadurch vor Schäden wegen Überhitzung schützen. Dabei kann zur Verstärkung der Strömungswirkung vorgesehen sein, dass das Mitnehmergehäuse ein die Strömung des Medium in Richtung auf den Dichtspalt ablenkendes Element aufweist. Gemäss einer anderen besonders vorteilhaften Ausgestaltung der Erfindung kann das Medium zu einer Zwangsströmung längs des rotierenden Gleitringes und Dichtspaltes veranlasst werden, ohne dass externe angetriebene Pumpmittel vorgesehen werden müssen, indem die in der Welle vorgesehene Zuführpassage für das Strömungsmedium einen im wesentlichen radialen an der Gleiringdichtung ausmündenden Abschnitt umfasst, so dass das Strömungsmedium bei Drehung der Welle Zentrifugalkräften ausgesetzt ist, die eine Pumpwirkung ausüben können.

Obschon die Erfindung in Verbindung mit einem bevorzugten Einsatz bei der Abdichtung von Klimakompressoren für Kraftfahrzeuge und dgl. vorgestellt wird, bei denen das abzudichtende Medium ein Öl ist, in dem häufig Gase in gelöster Form enthalten sind, ist die Erfindung auf dieses Anwendungsgebiet nicht beschränkt. Vielmehr kann die Erfindung immer dann vorteilhaft zur Anwendung kommen, wenn die Gefahr eines Trockenlaufes der Gleitringdichtung infolge mangelnder Schmierung durch das abzudichtende flüssige Medium, hervorgerufen durch Ablagerung von Gasblasen und dgl. am Dichtspalt, besteht. Diese Gasblasen können bei einem plötzlichen Druckabfall aus dem abzudichtenden Medium ausperlen und sich im Bereich des Dichtspaltes ablagern, so dass Gas in den Dichtspalt hineingelangen kann, was zu einem gefürchteten Trockenlauf mit der Folge eines vorzeitigen Verschleisses der Gleitringdichtung führen kann.

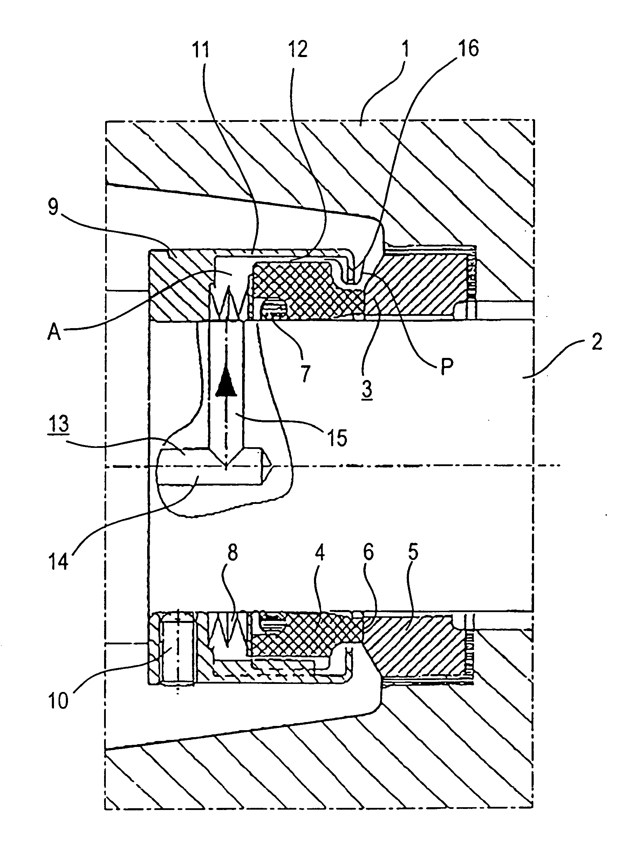

Die Erfindung wird nachfolgend anhand der Zeichnung, die eine Ausführungsform der Erfindung in längsgeschnittener, teilweise weggebrochener Ansicht zeigt, näher beschrieben.

In der Zeichnung betrifft das Bezugszeichen 1 das Gehäuse einer abzudichtenden Gerätschaft, z.B. das Gehäuse eines Klimakompressors, und das Bezugszeichen 2 eine Welle, z.B. die Antriebswelle des Klimakompressors, die durch eine Gehäusebohrung hindurchgeführt ist. Das Bezugszeichen 3 betrifft eine Gleitringdichtung zur Abdichtung des Gehäuseinnern an der Durchtrittsstelle der Welle 2 durch die Gehäusebohrung.

Die Gleitringdichtung 3 kann grundsätzlich herkömmlicher Bauart sein und demzufolge ein Paar zusammenwirkende Gleitringe 4, 5 mit gegenüberliegenden Dichtflächen in radialen oder annähernd radialen Ebenen umfassen, die zwischen sich bei Betrieb einen Dichtspalt 6 definieren und axial und radial begrenzen. Einer der Gleitringe, der Gleitring 5, ist am Gehäuse 1 in geeigneter, nicht näher gezeigter Weise drehfest gehalten und gegenüber dem Gehäuse 1 abgedichtet.

Der andere Gleitring 4 ist zur gemeinsamen Drehung mit der Welle 2 vorgesehen. Der Gleitring 4 ist zu diesem Zweck auf der Welle 2 mit Lossitz aufgesetzt, wobei zwischen dem äusseren Umfang der Welle 2 und dem inneren Umfang des Gleitringes 4 eine abdichtende Beziehung besteht, indem in einer Nut im Gleitring 4 eine Sekundärdichtung 7, vorzugsweise in Gestalt eines O-Ringes, angeordnet ist. Die Sekundärdichtung 7 ermöglicht eine axiale Bewegung des Gleitringes 4 relativ zur Welle 2. Der Gleitring 4 kann daher unter der Wirkung einer Vorspanneinrichtung, die vorzugsweise in Gestalt von ein oder mehreren Federn 8 ausgebildet ist, gegen den drehfesten Gleitring 5 vorgespannt werden, um den Dichtspalt 6 entsprechend den jeweilig herrschenden Betriebsverhältnissen einzustellen.

Die oder jede Vorspannfeder 8 ist mit einem ihrer axialen Enden an der zugewandten Rückseite des Gleitringes 4 abgestützt, während ihr anderes axiales Ende an einem Mitnehmerelement oder Mitnehmerring 9 anliegt. Der Mitnehmerring 9 ist auf der Welle 2 aufgesetzt und dagegen in geeigneter Weise, z.B. durch eine in den Mitnehmerring 9 radial einschraubbare Klemmschraube 10 fixiert, so dass der Mitnehmerring 9 die Drehbewegung der Welle 2 mitmacht.

Vom Mitnehmerring 9 steht axial ein im Wesentlichen rohrförmiges, umfänglich geschlossenes Mitnehmergehäuse 11 ab, das einen Raum A, der durch den Mitnehmerring 9 und Gleitring 4 axial begrenzt und gegenüber dem Inneren des Gehäuses 1 bis auf einem radialen Spalt 12 zwischen dem inneren Umfang des Mitnehmergehäuses 11 und dem äusseren Umfang des Gleitringes 4 abgedichtet ist. Der Raum A steht daher in Fluidverbindung mit dem radialen Spalt 12. Das Mitnehmergehäuse 11 hat vorzugsweise eine solche axiale Erstreckung, dass darin bei Betrieb der überwiegende Teil des Gleitringes 4 aufgenommen ist und nur ein kurzer axialer Bereich des Gleitringes 4 nahe dem Dichtspalt 6 ausserhalb des Mitnehmergehäuses 11 zu liegen kommt.

Zwischen dem Mitnehmerring 9 und dem Gleitring 4 besteht eine Drehkraft übertragende Beziehung in Gestalt einer Nut-Feder-Kupplung, die herkömmlicher Bauart sein kann und deshalb hier nicht näher beschrieben werden braucht. Auch andere bekannte Kupplungseinrichtungen könnten vorgesehen werden.

In der Welle 2 ist eine das allgemeine Bezugszeichen 13 aufweisende Passage für die Zuführung eines flüssigen Medium in den Raum A der Gleitringdichtung 3 vorgesehen. Bei der gezeigten Ausführungsform umfasst die Passage 13 einen zentralen in der Welle 2 angeordneten axialen Abschnitt 14 und einen davon abzweigenden radialen Abschnitt 15. Der radiale Abschnitt 15 der Passage 13 mündet an einer Stelle der Oberfläche der Welle 2 aus, die zu dem Raum A der Gleitringdichtung 3 ausgerichtet ist.

Obschon in der Zeichnung nur eine Passage 13 mit einem radialen Abschnitt 15 dargestellt ist, könnten auch mehrere Passagen 13 in der Welle 2 eingebracht sein, oder es könnten mehrere radiale Abschnitte 15 von einem einzelnen axialen Abschnitt 14 abzweigen, die in einem umfänglichen Winkelabstand voneinander an der Oberfläche der Welle 2 ausmünden, so dass an unterschiedlichen Bereichen das Medium in den Raum A eingeführt werden kann.

Infolge der radialen Ausrichtung des Abschnittes 15 der Passage 13 bewirkt eine Drehung der Welle 2 eine Pumpwirkung auf das in dem radialen Abschnitt 15 befindliche Medium infolge der durch die Drehung hervorgerufenen Fliehkräfte, so dass das Medium zu einer Zwangsströmung in den Raum A und längs des radialen Spaltes 12 veranlasst wird, um an oder nahe beim Dichtspalt 6 aus dem Spalt 12 auszutreten und in das Innere des Gehäuses 1 abzufliessen.

Es ist erwünscht, dass beim Austritt aus dem radialen Spalt 12 ein Strömung unmittelbar längs der äusseren Umfangsbereiche der beiden Gleitringe 4, 5 nahe dem Dichtspalt 6 bewirkt wird, um Gasblasen oder andere Fremdpartikel, die sich im Bereich nahe dem Dichtspalt 6 abgelagert haben können, mitzureissen und zurück ins Innere des Gehäuses 1 zu befördern, so dass sichergestellt ist, dass am Dichtspalt 6 nur flüssiges abzudichtendes Medium ansteht. Zur Förderung dieser Wirkung kann an dem dem Dichtspalt 6 zugewandten axialen Ende des Mitnehmergehäuses 11 ein strömungsablenkendes Element 16 vorgesehen sein. In einer einfachen Ausführungsform kann es sich dabei um eine flanschartige, radial nach innen gerichtete Abbiegung des Mitnehmergehäuses 11 handeln, so dass nahe dem Dichtspalt 6 die anfängliche axiale Strömung des Mediums radial nach innen gegen den benachbarten Umfangsbereich des Gleitringes 4 gerichtet wird, wie dies durch den Pfeil P in der Zeichnung angedeutet ist.

Die Strömung des Mediums längs des radialen Spaltes 12 übt eine kühlende Wirkung auf den Gleitring 4 aus, indem das Strömungsmedium Wärme von der äusseren Umfangsfläche des Gleitringes 4 abführen kann. Ausserdem hält die Mediumströmung die Vorspannfedern 8, den radialen Spalt 12 und die dem Raum A ausgesetzte Oberfläche der Welle 2 frei von Verunreinigungen, z.B. Ablagerungen von Fremdstoffen. Ablagerungen könnten die axiale Beweglichkeit des Gleitringes 4 beeinträchtigen.

Zwar wird bevorzugt, dass der radiale Spalt 12 einen Durchlassquerschnitt für das Strömungsmedium schafft, der wenigstens gleich, vorzugsweise etwas grösser als der Durchlassquerschnitt der Passage 13 ist. Im Rahmen der Erfindung liegt jedoch auch eine solche Bemessung des radialen Spaltes 12, dass dieser einen Durchlassquerschnitt hat, der kleiner als der der Passage 13 ist, was eine erhöhte Strömungsgeschwindigkeit im Spalt 12 bewirken kann.

Obschon der radiale Abschnitt 15 der Passage 13 im Allgemeinen eine ausreichende Pumpwirkung ausübt, so dass auf andere Mittel zur zwangsweisen Förderung des Mediums durch die Passage 13 verzichtet werden kann, liegt es im Rahmen der Erfindung, wenn erwünscht, auch andere oder zusätzliche geeignete Pumpmittel vorzusehen. In diesem Fall könnte darauf verzichtet werden, die Passage 13 mit einem radialen Abschnitt 15 zu versehen. Die Passage 13 könnte daher auch als axiale Nut in der äusseren Oberfläche der Welle 2 ausgebildet sein, die im Bereich des Raumes A der Gleitringdichtung 3 endet und gegenüber dem Inneren des Gehäuses 1 durch eine auf der Welle 2 aufgeschobene Büchse oder dgl. abgedeckt sein kann. Obschon es sich ferner vorzugsweise bei dem über die Passage 13 in den Raum A der Gleitringdichtung 3 eingeführten Strömungsmedium um das abzudichtende Öl handelt, indem die Passage 13 in Verbindung mit dem Inneren des Gehäuses 1 steht, kann, wenn erwünscht, das Strömungsmedium auch unabhängig von dem abzudichtenden Öl von einer separaten Mediumquelle aus in die Passage 13 eingeführt werden. Es versteht sich ferner, dass, wenn erwünscht, der drehfeste Gleitring anstelle des rotierenden Gleitringes axial beweglich angeordnet und mit einer Federvorspannkraft gegen den rotierenden Gleitring vorgespannt sein könnte.

## Patentansprüche

1. Anordnung aus einer Welle mit darauf montierter Gleitringdichtung, welche Gleitringdichtung (3) ein Paar zusammenwirkende Gleitringe (4,5) umfasst, deren Dichtflächen zwischen sich einen Dichtspalt (6) begrenzen, wobei einer der Gleitringe auf der Welle (2) in Drehkraft übertragender Beziehung zu einem an der Welle montierten Mitnehmerelement (9) angeordnet ist, während der andere Gleitring zur drehfesten Montage an einem stationären Bauteil (1) vorgesehen ist, **dadurch gekennzeichnet, dass** das Mitnehmerelement (9) ein den äusseren Umfang des Gleitringes (4) mit einem radialen Spalt (12) übergreifendes rohrförmiges Mitnehmergehäuse (11) aufweist, und dass in der Welle (2) wenigstens eine einerends in einen vom Mitnehmergehäuse (11) umgrenzten Raum (A) ausmündende Passage (13) zur Zuführung eines Strömungsmediums vorgesehen ist, das über den radialen Spalt (12) nach aussen abführbar ist, wobei der radiale Spalt einen Strömungsweg für das Strömungsmedium schafft, der an oder nahe bei dem Dichtspalt (6) endet.

2. Anordnung nach Anspruch 1, **dadurch gekennzeichnet, dass** das Mitnehmergehäuse (11) an einem axialen Ende ein die Strömung des Strömungsmediums in Richtung auf den Dichtspalt (6) ablenkendes Element (16) aufweist.

3. Anordnung nach Anspruch 1 oder 2, **dadurch gekennzeichnet, dass** die Passage (13) einen im Wesentlichen radial in der Welle (2) vorgesehenen und im Raum (A) ausmündenden Abschnitt (15) umfasst.

4. Anordnung nach Anspruch 1, 2 oder 3, **dadurch gekennzeichnet, dass** das Strömungsmedium das abzudichtendes Medium in einem Gehäuseinnern ist, in das die Passage (13) anderenends ausmündet.

5. Anordnung nach einem der vorhergehenden Ansprüche, **dadurch gekennzeichnet, dass** der radiale Spalt (12) einen Durchlassquerschnitt hat, der wenigstens gleich, vorzugsweise grösser als der der Passage (13) ist.

6. Anordnung nach einem der Ansprüche 1 bis 4, **dadurch gekennzeichnet, dass** dass der radiale Spalt (12) einen Durchlassquerschnitt hat, der kleiner als der der Passage (13) ist, um eine Erhöhung der Strömungsgeschwindigkeit im Spalt zu bewirken.

## Claims

1. Arrangement of a shaft with a mechanical face seal mounted thereon, said mechanical face seal (3) comprising a pair of cooperating seal rings (4,5) whose seal faces delimit a seal gap (6) therebetween, wherein one of the seal rings on the shaft (2) is in torque transmitting relationship with a driver member (9) mounted on the shaft, whilst the other seal ring is intended for non-rotational mounting on a stationary component (1), **characterized in that** the driver member (9) comprises a tubular driver housing (11) extending over the outer periphery of the seal ring (4) with a radial gap (12), and **in that** at least one passage (13) is provided in the shaft (2), said passage emerging at one end in a chamber (A) enclosed by the driver housing (11) and serving for the supply of a flowing medium which is removable outwardly through the radial gap (12), whereby the radial gap creates a flow path for the flowing medium which ends at or near the seal gap (6).

2. Arrangement according to claim 1, **characterized in that** the driver housing (11) comprises at one axial end thereof an element (16) for diverting the stream of flowing medium towards the seal gap (6).

3. Arrangement according to claim 1 or 2, **characterized in that** the passage (13) comprises a section (15) which is disposed substantially radially in the shaft (2) and emerges in the chamber (A).

4. Arrangement according to claim 1, 2 or 3, **characterized in that** the flowing medium is the medium requiring sealing in the interior of a housing into which the passage (13) emerges at the other end.

5. Arrangement according to any of the preceding claims, **characterized in that** the radial gap (12) has a throughput cross-section which is at least equal to, but preferably greater than that of the passage (13).

6. Arrangement according to any of the claims 1 to 4, **characterized in that** the radial gap (12) has a throughput cross-section which is smaller than that of the passage (13) in order to produce an increase in the rate of flow in the gap.

## Revendications

1. Ensemble constitué d'un arbre sur lequel un joint à anneaux glissants est monté, lequel joint à anneaux glissants (3) comprend une paire d'anneaux glissants (4, 5) coopérants, dont les surfaces d'étanchéité délimitent entre elles un joint d'étanchéité (6), un des anneaux glissants étant placé sur l'arbre dans un rapport de transmission de force de rotation avec un élément d'entraînement (9) monté sur l'arbre (2), alors que l'autre anneau glissant est prévu pour être monté de manière solidaire en rotation à un composant stationnaire (1), **caractérisé en ce que** l'élément d'entraînement (9) présente un boîtier d'entraînement (11) tubulaire recouvrant la périphérie extérieure de l'anneau glissant (4) avec un jeu radial (12), et **en ce qu'**au moins un passage (13) débouchant d'un côté dans un espace (A) délimité par le boîtier d'entraînement (11) est prévu dans l'arbre (2) servant à amener un milieu d'écoulement, qui peut être évacué vers l'extérieur par le biais du jeu radial, le jeu radial (12) formant un chemin d'écoulement pour le milieu d'écoulement, qui se termine au niveau ou à proximité du jeu d'étanchéité (6).

2. Ensemble selon la revendication 1, **caractérisé en ce que** le boîtier d'entraînement (11) présente au niveau d'une extrémité axiale, un élément (16) déviant l'écoulement du milieu d'écoulement en direction du joint d'étanchéité (6).

3. Ensemble selon la revendication 1 ou 2, **caractérisé en ce que** le passage (13) comprend une section (15) débouchant dans l'espace (A) et prévue de manière essentiellement radiale dans l'arbre (2).

4. Ensemble selon la revendication 1, 2 ou 3, **caractérisé en ce que** le milieu d'écoulement est le milieu à étancher à l'intérieur d'un boîtier, dans lequel le passage (13) débouche au niveau de l'autre extrémité.

5. Ensemble selon l'une quelconque des revendications précédentes, **caractérisé en ce que** le jeu radial (12) a une section de passage, qui est au moins égale, de préférence supérieure à celle du passage (13).

6. Ensemble selon l'une quelconque des revendications 1 à 4, **caractérisé en ce que** le jeu radial (12) a une section de passage, qui est inférieure à celle du passage (13) afin de provoquer une augmentation de la vitesse d'écoulement dans le jeu.
